# EUROPEAN PATENT APPLICATION

(11) **EP 2 200 059 A1**
(43) Date of publication of application: **23.06.2010**
(21) Application number: 08836376.7
(22) Date of filing: 30.09.2008
(51) Int. Cl.: H01H 13/08, B60R 21/16, H01H 1/06

(54) **SWITCH DEVICE AND AIRBAG DEVICE WITH HORN SWITCH**

(30) Priority: 05.10.2007 JP 2007262546
(71) Applicant: Ashimori Industry Co., Ltd., Osaka-shi Osaka 550-0014 (JP)
(72) Inventor: HAYASHI, Naoya, Settsu-shi Osaka 566-0001 (JP); SASAKI, Kou, Settsu-shi Osaka 566-0001 (JP); KIYOHARA, Junichi, Settsu-shi Osaka 566-0001 (JP)
(74) Representative: Appelt, Christian W.
(86) International application number: PCT/JP2008/067745
(87) International publication number: WO 2009/044734

(57) **Abstract**

In a switch device, such as a horn switch device attached to a steering wheel, a water column is prevented from being formed between contact sections of a pair of contact points facing each other.

A movable member (30) and a fixed member (40) of a horn switch device (20) are disposed in an opposed manner such that the movable member (30) on an upper side can be moved toward and away from the fixed member (40) on a lower side and such that it is urged upward by urging means (50). Furthermore, at least a pair of protruding contact points (35) and (45) are formed on the movable member (30) and the fixed member (40), at positions facing each other. By bringing them into contact with each other, the members (30) and (40) are electrically connected, closing a horn circuit. A rivet (46), serving as a contact section, is attached to a tip portion of the fixed contact point (45) on the lower side, and an opening portion (36) is provided in the movable contact point (35) on the upper side, the outer peripheral side of which is made to serve as a contact section to be brought into contact with the rivet (46).

## Description

### Technical Field

The present invention relates to a switch device, such as a horn switch device installed in a vehicle (e.g. car), which conducts electricity when contact sections of a pair of contact points are brought into contact with each other and to an airbag device with a horn switch having a switch device.

### Background Art

Conventionally, as an example of a switch device, such as a horn switch device for sounding a horn attached to a steering wheel of a vehicle, an airbag device with a horn switch is known, in which a switch mechanism (horn switch device) is integrated with an airbag device having an airbag capable of being inflated and deployed (see Patent Document 1).

The horn switch device of this conventional airbag device includes a fixed member fixed to a steering wheel; a movable member disposed above it, on an occupant side, in an opposed manner so as to be capable of moving toward and away from it; and urging means that urges the movable member upward such that it moves away from the fixed member. Furthermore, the horn switch device has at least a pair of contact points (contact point sections) projecting toward each other at positions where the fixed member and the movable member face each other, and, at the tips thereof, conducting terminals serving as contact sections are provided. When the movable member is pressed down toward the fixed member, the conducting terminals are brought into contact with each other and are electrically connected. Thus, the horn circuit is closed, sounding the horn of the vehicle.

If a vehicle having this horn switch device is placed in an environment where condensation occurs, the condensation formed at the contact point of the movable member gathers at the lower conducting terminal and grows to a large size, possibly touching the conducting terminal of the contact point of the fixed member on the lower side and forming a water column between the conducting terminals. In this case, the conducting terminals of the contact points are electrically connected, suddenly sounding the vehicle's horn. The conducting terminals are kept electrically connected until the water column disappears, keeping the horn sounding.

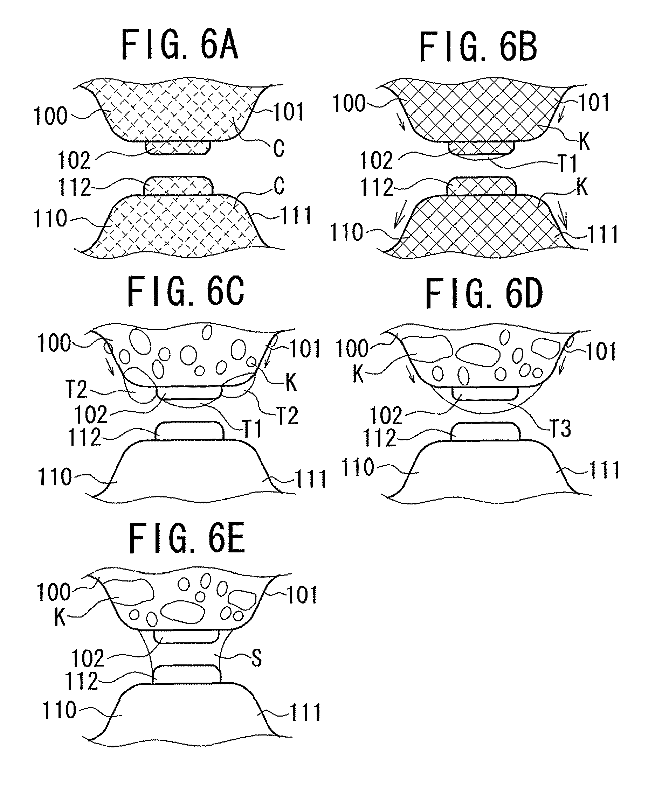

FIG. 6 is a schematic view for explaining the mechanism of how a water column is formed between the conducting terminals of the contact points of the movable member and the fixed member, showing the vicinity of the contact points of the movable member and the fixed member in an enlarged side view. Furthermore, FIG. 6 sequentially and schematically shows changes occurring on the surfaces of the contact point sections when the environment where the horn switch device is disposed (ambient environment) is changed from a below-freezing environment to a normal temperature environment by, for example, moving a vehicle from a place where the temperature is below freezing (herein, about -30 ºC) to a place where the temperature is normal.

Herein, a movable member 100 on the upper side and a fixed member 110 on the lower side are formed by, for example, pressing plate-like members and respectively have contact points 101 and 111 that are formed in the shape of smoothly protruding projections and are disposed so as to face each other. Furthermore, substantially disc-shaped rivets 102 and 112, serving as the conducting terminals, are fixed at the tips of the contact points 101 and 111, respectively, and the facing surfaces (contact surfaces) of them are disposed with a predetermined distance, corresponding to the horn stroke of the horn switch device, therebetween.

When the ambient environment of the horn switch device is changed from a below-freezing environment to a normal temperature environment, first, as shown in FIG. 6A, immediately after the change, water vapor in the air freezes and frost C (shown by a lattice-like hatching in the figure) is formed on the surfaces of the movable member 100 and the fixed member 110, whose temperatures are below freezing. Next, as shown in FIG. 6B, the frost C melts, and a film-like condensation K is formed over the entire surfaces of the members 100 and 110. The condensation K gathers and moves downward by receiving the influence of surface tension or gravity, and, at the fixed member 110 on the lower side, the condensation K flows downward from the rivet 112 and the contact point 111.

On the other hand, at the movable member 100 on the upper side, the condensation K on the inclined surface of the contact point 101 flows downward, gathers around a step portion between the contact point 101 and the rivet 102, and gradually grows to a larger size. At the same time, the condensation K on the rivet 102 gathers and forms droplets T1. Then, as shown in FIG. 6C, more condensation K occurs on the inclined surface of the contact point 101 having a low temperature. The condensation K flows down and is combined with droplets T2 staying in the step portion of the rivet 102. As a result, the droplets T2 grow and hang down toward the contact point 111 of the fixed member 110. In this manner, the droplets T2 formed at the step portion of the rivet 102 gradually grow and are combined with one another as the condensation K increases and gathers, and then, they are combined with the droplets T1 on the rivet 102. Thus, as shown in FIG. 6D, a large droplet T3 that covers the entirety of the rivet 102 is formed.

Thereafter, the condensation K gathers toward the droplet T3, whereby the droplet T3 grows further and hangs down greatly. Finally, as shown in FIG. 6E, the droplet T3 touches the rivet 112 of the fixed member 110 on the lower side, forming a water column S between the rivets 102 and 112 due to the surface tension. The rivets 102 and 112 are electrically connected through this water column S, closing the horn circuit of the horn switch device. As a result, the vehicle's horn starts to sound, and the horn keeps sounding until the water column S vaporizes and disappears, cancelling the conducting state of the rivets 102 and 112.

Regardless of the presence/absence of an airbag device, this water column S is formed in vehicle's horn switch devices having the same structure. Thus, in order to prevent an abnormal operation, an effective countermeasure needs to be taken against the water column S. Furthermore, even in switch devices other than the horn switch devices, if the devices are of a type in which contact sections of a pair of contact points are brought into contact with each other and are electrically connected similarly to this case, a similar problem may occur, for example, formation of the water column S may cause a switch fault if it is disposed in an environment where condensation occurs. Therefore, similarly to this case, a countermeasure needs to be taken.

Patent Document 1: Japanese Unexamined Patent Application Publication No. 2006-351313

### Disclosure of Invention

### Problems to be Solved by the Invention

The present invention has been made in view of the above-described conventional problems, and an object thereof is, in a switch device such as a horn switch device attached to a steering wheel, to prevent a water column from being formed between contact sections of a pair of contact points facing each other so that the occurrence of a switch fault due to the contact points being electrically connected through the water column can be prevented.

### Means for Solving the Problems

A first aspect of the invention is a switch device comprising at least a pair of contact points facing each other that are disposed on an upper side and a lower side so as to be capable of relatively moving toward and away from each other, the switch device conducting electricity when contact sections of the pair of contact points are brought into contact with each other. An opening portion is provided in the contact section of the contact point disposed on the upper side.
A second aspect of the invention is the switch device according to the first aspect, in which an opening of the opening portion is smaller than the contact section of the contact point disposed on the lower side, and an outer peripheral side of the opening portion is the contact section of the contact point disposed on the upper side.
A third aspect of the invention is the switch device according to the second aspect, in which the contact section of the contact point disposed on the lower side is disc-shaped.
A fourth aspect of the invention is the switch device according to any one of the first to third aspects, in which the switch device is a horn switch device attached to a steering wheel, and the pair of contact points include a fixed contact point provided on a fixed member that is fixed to the steering wheel and a movable contact point provided on a movable member at a position facing the fixed contact point, the movable member being disposed above the fixed member in an opposed manner so as to be capable of moving toward and away from the fixed member and being urged in a direction away from the fixed member.
A fifth aspect of the present invention is an airbag device with a horn switch to be attached to a steering wheel, the airbag device including the switch device according to the fourth aspect.

### Advantages

According to the present invention, in a switch device, such as a horn switch device attached to a steering wheel, a water column is prevented from being formed between contact sections of a pair of contact points facing each other, so that a switch fault occurring due to the water column electrically connecting the contact points can be prevented.

### Brief Description of Drawings

[FIG. 1] FIG. 1 is a front view schematically showing an airbag device according to this embodiment.
[FIG. 2] FIG. 2 is a perspective view of the airbag device according to this embodiment, viewed from back.
[FIG. 3] FIG. 3 is a side view of the airbag device according to this embodiment, viewed from a side.
[FIG. 4] FIG. 4 is a schematic view for explaining a horn switch device of the airbag device according to this embodiment.
[FIG. 5] FIG. 5 is a schematic view showing a state in which condensation is formed on the horn switch device according to this embodiment.
[FIG. 6] FIG. 6 is a schematic view for explaining a mechanism of how a water column is formed between conducting terminals of contact points of a movable member and a fixed member.

### Explanation of Reference:

1: airbag device, 10: airbag cover, 11: inflator, 12: airbag, 20: horn switch device, 30: movable member, 31: fixed piece , 32: rivet, 33: connecting terminal, 35: movable contact point, 36: opening portion, 40: fixed member, 41: attaching member, 45: fixed contact point, 46: rivet, 50: urging means, 55: guide-and-support means, 55A: support post member, 55B: nut, C: frost, K: condensation, S: water column, T: droplet, and W: steering wheel.

### Best Mode for Carrying Out the Invention

A switch device according to an embodiment of the present invention will be described below with reference to the drawings.
This switch device includes a switch mechanism that has at least a pair of contact points (contact point members) facing each other that are disposed on an upper side and a lower side and are capable of relatively moving toward and away from each other. The switch mechanism is made to conduct electricity when contact sections of the pair of contact points are brought into contact with each other. Furthermore, the switch device opens or closes a predetermined switch circuit according to the conducting or non-conducting state of these contact points, thereby serving as a switch and exhibiting a switch function.

Note that, in this switch device, the upper contact point may be disposed at a position diagonally above the lower contact point in an opposed manner, other than a position immediately thereabove. That is, in the present invention, the phrase "they are disposed on an upper side and a lower side" means, as described above, one of them is disposed relatively above or below the other, and the positional relationship of them is relatively above and below.

Furthermore, in the following embodiment, as an example of the switch device, a horn switch device for sounding a horn that is attached to the steering wheel of a vehicle, in particular, an airbag device with a horn switch (hereinafter simply, an "airbag device") that has a horn switch device and a substantially bag-shaped airbag capable of being inflated and deployed and is attached to the steering wheel having a horn switch function, will be described.

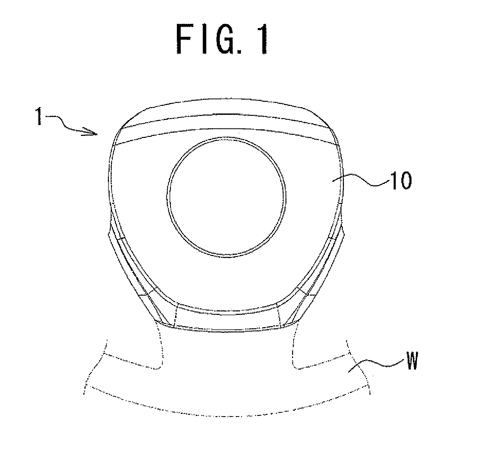

FIG. 1 is a front view schematically showing an airbag device according to this embodiment.
As shown in the figure, an airbag device 1, is attached to a steering wheel W provided at a driver's seat of a vehicle and is incorporated into the substantially central portion thereof. The airbag device 1 has an airbag cover 10 on the outer surface, which is on the occupant side. Furthermore, the airbag device 1 has an airbag, an inflator (a gas generator), etc., disposed inside the airbag cover 10 and has a horn switch device (horn switch mechanism) disposed on the back surface side (the side opposite the occupant, and, hereinafter referred to as a "back surface side").

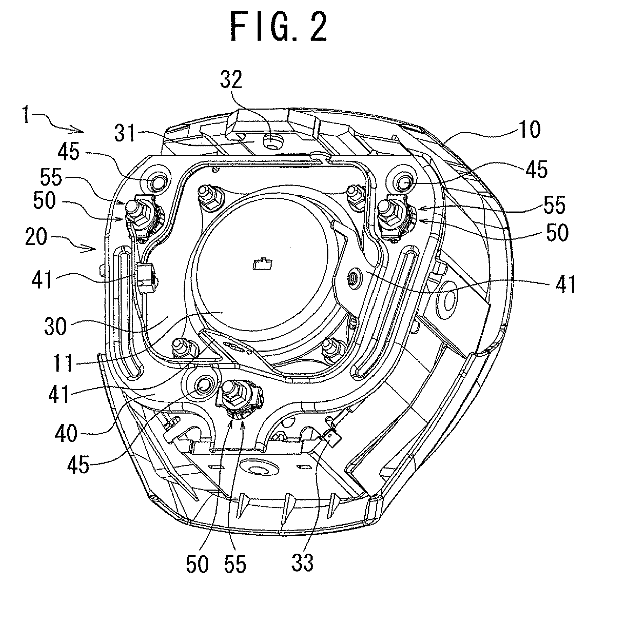

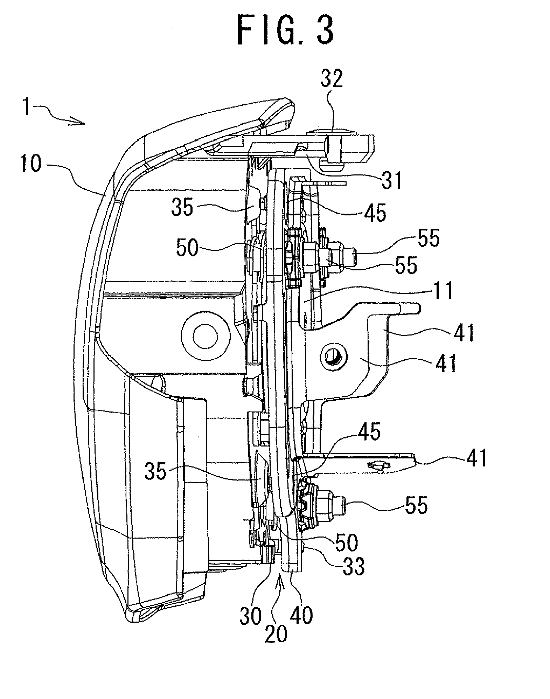

FIG. 2 is a perspective view of the airbag device 1, viewed from back (far side with respect to the plane of the sheet of FIG. 1), schematically showing, in outline, the structure thereof. FIG. 3 is a side view of the airbag device 1, viewed from a side, schematically showing the side surface shape viewed from the left side in FIG. 2.
As shown in the figures, the airbag device 1 includes the above-described airbag cover 10, the airbag (not shown) disposed therein, a substantially disc-shaped inflator 11 attached to the back side (back surface side) of the airbag, and a horn switch device 20 disposed on the back surface side of the airbag cover 10.

The airbag cover 10, which is formed in a substantially bowl shape from resin or the like, is attached to the steering wheel W through a movable member 30, a fixed member 40, etc., of the horn switch device 20 (described below) and is disposed at the substantially central portion thereof. Furthermore, in the airbag cover 10, the airbag (not shown) is accommodated in a folded state so as to be capable of being inflated and deployed. The airbag cover 10 has a tear line formed at a predetermined position of the inner surface thereof so that, when the airbag is inflated and deployed by gas from the inflator 11, it is pressed and split by the inflating and deploying force, allowing the airbag to be inflated and deployed toward the front side of the steering wheel W. In addition, the airbag cover 10, in a state of being incorporated into the steering wheel W, constitutes the outer surface on the occupant side and also functions as an operation plate member (switch member) that is pressed, operated, and pressed down by the occupant and transmits the force to the horn switch device 20 when the horn is to be sounded.

The horn switch device 20 has, in addition to the airbag cover 10 and the substantially plate-shaped movable member 30 and fixed member 40, a plurality of (herein, three) urging means 50 that urge the movable member 30 and are provided between the members 30 and 40, and a switch mechanism that constitutes the horn switch.

The fixed member 40 is integrally fixed to the steering wheel W and is made of a conductive member, such as a metal plate. The fixed member 40 is formed, in plan view, in a substantially rectangular shape and in a substantially ring-shape having an opening larger than the inflator 11 at the central portion. Furthermore, the fixed member 40 has a plurality of (in the figure, three) attaching members 41 projecting to the back surface side, formed along the edge of the opening on the inner peripheral side. The fixed member 40 is attached and fixed to an attaching member, such as a central boss portion of the steering wheel W by screws or the like, through these attaching members 41.

The movable member 30 is movable in directions toward and away (farther) from the fixed member 40 and is made of a conductive member, such as a metal plate. The movable member 30 is formed in a substantially plate shape that covers the opening on the back surface side of the airbag cover 10 and is attached and integrally fixed to the back surface side portion of the airbag cover 10 through a fixed piece 31, a rivet 32, etc., so as to cover the opening. Furthermore, an attachment hole for the inflator 11 is formed at the substantially central portion of the movable member 30. The inflator 11 inserted into the attachment hole is fixed by screws or the like, in such a manner that substantially a half thereof is positioned in the airbag cover 10.

In addition, the movable member 30 is supported by the fixed member 40 through guide-and-support means 55, at three locations as described above where the urging means 50 are disposed. The movable member 30 is disposed above the fixed member 40 (i.e., on the occupant side) so as to face the fixed member 40 with a predetermined distance therebetween. In addition, the movable member 30 has a substantially plate-like connecting terminal 33 projecting toward the back surface side, which is to be connected to a horn circuit of the vehicle. The movable member 30 also has a movable contact point 35 at a position facing at least one (herein, three) fixed contact point 45 provided on the fixed member 40. The movable contact point 35 and the fixed contact point 45 form a pair and constitute the contact points of the horn circuit. The thus-configured horn switch device 20 will be described in more detail below.

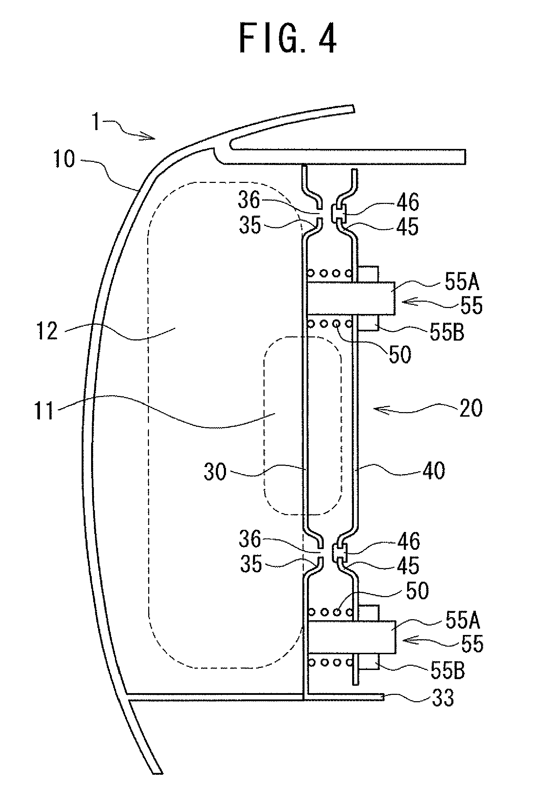

FIG. 4 is a schematic view for explaining the horn switch device 20 of the airbag device 1 according to this embodiment. FIG. 4 schematically shows the relevant part of the airbag device 1, viewed from the side corresponding to FIG. 3, and a part thereof is shown in cross section.
Note that, as shown in the figure, between the airbag cover 10 and the movable member 30, the airbag 12 is accommodated in a folded state around the inflator 11 inserted therein. When the occupant operates the horn, the entirety of them moves in directions toward and away from the fixed member 40 (in the figure, the right direction and the left direction, respectively).

In this horn switch device 20, the movable member 30 and the fixed member 40 are connected to each other by the guide-and-support means 55 provided at the above-described three locations (FIG. 4 shows only two locations), and the movable member 30 is urged in the direction away from the fixed member 40 by the urging means 50 made of an elastic member, such as a spring or rubber. Each guide-and-support means 55 has a substantially column-shaped support post member 55A that is fixed to the movable member 30, and a male thread portion (not shown) formed at the tip (free end) thereof penetrates through a through-hole in the fixed member 40 to the other side, and a nut 55B is screwed thereonto and fixed. The fixed member 40 and the movable member 30 are connected to each other through them. On the other hand, the urging means 50 made of a coil-shaped coil spring is provided on the outer peripheral side of the support post member 55A disposed between the members 30 and 40 in a penetrating manner and constantly urges the movable member 30 upward toward the fixed member 40 (toward the occupant side, i.e., left side in FIG. 4).

The horn switch device 20 moves the movable member 30 away from the fixed member 40 utilizing the urging force of the urging means 50 and holds the members 30 and 40 at a distance from each other at a position where the fixed member 40 is in contact with the nut 55B of the support post member 55A. From this state, when the occupant operates the horn to sound it and the airbag cover 10 is pressed, the airbag cover 10, the movable member 30, etc., are simultaneously pressed downward (to the right side in FIG. 4) and are guided by the support post member 55A. Thus, the movable member 30 moves toward the fixed member 40, resisting the urging force of the urging means 50. Furthermore, when the members 30 and 40 move toward each other, at least one pair of contact sections among the above-described three contact section pairs (FIG. 4 shows only two of them) of the movable contact point 35 and the fixed contact point 45 are brought into contact with each other, making the horn switch device 20 conduct electricity. Thus, they constitute the switch mechanism for opening or closing the horn circuit.

More specifically, the fixed contact point 45 provided on the fixed member 40 is formed by, for example, pressing a plate-like member in a substantially bowl shape with a relatively small thickness, and is formed in the shape of a projection smoothly protruding toward the movable member 30 and having a substantially circular shape in front view. Furthermore, a through-hole is formed at the substantially central portion of the tip (protruding end) of the fixed contact point 45. A rivet 46, serving as the conducting terminal, is inserted into the through-hole and is deformed to be fixed. The disc-like portion of the rivet 46 on the movable member 30 side constitutes the contact section with which the movable contact point 35 is brought into contact.

On the other hand, the movable contact point 35 of the movable member 30 is formed so as to face the fixed contact point 45 of the fixed member 40,and is formed in the shape of projections smoothly protruding toward the fixed member 40 at each position, similarly to the fixed contact point 45. Furthermore, the movable contact point 35 protrudes in the direction opposite to the direction in which the fixed contact point 45 protrudes, such that they are substantially symmetrical or analogous. In the horn switch device 20, the movable contact point 35 is disposed at a position above the fixed contact point 45, such that their tips (protruding ends) face each other. Note that, although the movable contact point 35 has a through-hole (herein, substantially circular hole) having a predetermined diameter at the substantially central portion of the tip (the surface facing the fixed contact point 45), unlike the fixed contact point 45 facing thereto, no rivet is fixed to the through-hole. The through-hole is open, and the peripheral portion of the through-hole is brought into contact with the rivet 46 of the fixed contact point 45.

That is, this horn switch device 20 has an opening portion 36 in the contact section of the movable contact point 35 on the upper side, and the opening portion 36 provided at the position inside the contact section prevents the formation of the above-described water column S (see FIG. 6). Furthermore, the size of the opening portion 36 is smaller than the contact section (the top surface of the rivet 46) of the fixed contact point 45 that is disposed below the opening portion 36 in an opposed manner, and the outer peripheral side of the opening portion 36 serves as the contact section of the movable contact point 35. Thus, in the movable contact point 35, a portions of the tip surface other than the opening portion 36 (outer peripheral portion) constitutes the contact section to be brought into contact with the fixed contact point 45, and at least a part thereof is configured to be able to come into contact with (touch) the top surface of the rivet 46 of the fixed contact point 45. In addition, herein, the opening portion 36 is formed such that the diameter of the opening is slightly smaller than the contact section of the disc-shaped rivet 46 of the fixed contact point 45 disposed below the opening portion 36, and such that they are provided at substantially central portion of the contact section of the movable contact point 35.

In the thus-configured horn switch device 20, when the occupant presses down the airbag cover 10 and the movable member 30 is moved downward (to the right side in FIG. 4), the contact sections of at least one movable contact point 35 and the fixed contact point 45 (rivet 46) of the fixed member 40 facing thereto are brought into contact with each other, electrically connecting the contact points 35 and 45, as well as the members 30 and 40. As a result, the horn circuit of the vehicle connected through the connecting terminal 33 is closed, and the vehicle's horn is sounded. Furthermore, when the occupant stops pressing the airbag cover 10, the urging means 50 moves the movable member 30 upward (to the left side in FIG. 4). Thus, the movable contact point 35 moves away from the fixed contact point 45 of the fixed member 40, and the contact sections also move away from each other, cancelling the conducting state. Thus, the horn circuit is opened and the horn stops sounding. In this manner, the horn switch device 20 opens or closes the horn circuit (switch circuit) according to whether or not the movable contact point 35 and the fixed contact point 45 are electrically connected, thereby exhibiting a switch function and serving as a horn switch.

Note that, in order to enable an occupant to perform an appropriate horn operation, the facing surfaces (contact surfaces) of the movable contact point 35 and the fixed contact point 45 (rivet 46) are disposed with a predetermined distance therebetween, corresponding to a predetermined horn stroke, when the occupant does not operate the horn. Furthermore, herein, the movable member 30 and the fixed member 40 are adjusted and disposed such that the contact surfaces of the movable contact point 35 and the fixed contact point 45 facing each other are placed at 1 to 5 mm distance from each other when the airbag cover 10 is not pressed down, and the opening portion 36 is formed to have a diameter of about 2 to 4 mm.

Next, the horn switch device 20 of this airbag device 1 will be described focusing on the effect of preventing the above-described water column S.

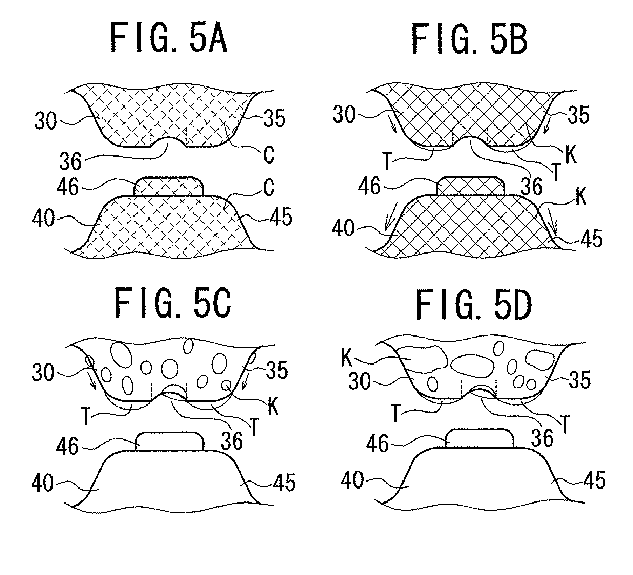

FIG. 5 is a schematic view showing a state in which condensation is formed on the horn switch device 20, showing, in an enlarged side view, the vicinity of a pair of contact points 35 and 45 of the movable member 30 on the upper side and the fixed member 40 on the lower side facing each other. Furthermore, corresponding to the conventional horn switch device (see FIG. 6), FIG. 5 schematically and sequentially shows changes occurring on the surfaces of the contact points 35 and 45 when the environment where the horn switch device 20, together with the airbag device 1, is disposed (ambient environment) is changed from a below-freezing environment (herein, about -30ºC) to a normal temperature environment.

When the ambient environment of the horn switch device 20 is changed from a below-freezing environment to a normal temperature environment, first, as shown in FIG. 5A, immediately after the change, water vapor in the air freezes and frost C (shown by a lattice-like hatching in the figure) is formed on the entire surfaces of the movable member 30 and the fixed member 40, whose temperatures are below freezing. Next, as shown in FIG. 5B, the frost C melts, and a film-like condensation K is formed over the entire surfaces of the members 30 and 40. The condensation K gathers and moves downward by receiving the influence of surface tension or gravity, and, at the fixed member 40 on the lower side, the condensation K flows downward from the rivet 46 and the fixed contact point 45.

On the other hand, at the movable member 30 disposed on the upper side, the condensation K on the inclined surface of the movable contact point 35 flows downward and gathers at the contact section of the movable contact point 35, forming droplets T. However, because the opening portion 36 is provided in this contact section, the droplets T do not gather in the vicinity of the center of the contact section, but are formed around the opening portion 36. In cases where a conducting terminal, such as a rivet, is provided on the movable contact point 35, a step portion is formed, which tends to gather the condensation K and hold the water. However, because the movable contact point 35 does not have a step portion, the condensation K does not gather at a predetermined location of the contact section but gathers in a scattered manner. Furthermore, next, as shown in FIG. 5C, even if the condensation K is additionally formed on the inclined surface etc., of the movable contact point 35 having a low temperature and part thereof flows down, although it grows more or less by being combined with the already-produced droplets T, they do not gather into one at the center of the lower end surfaces similarly to the above, and are distributed over a relatively large area, such as the contact section, at around the opening portion 36.

As has been described, in this horn switch device 20, the droplets T do not gather and grow to a large size at one location on the contact section of the movable contact point 35 due to the surface tension etc., but are maintained at a relatively small size. Therefore, the length by which the droplets T hang down toward the lower fixed contact point 45 is small. Thus, the produced droplets T remain around the opening portion 36 without touching the rivet 46 of the lower fixed contact point 45 etc., preventing the water column S (see FIG. 6E) from being formed between the movable contact point 35 and the fixed contact point 45 (rivet 46). Thereafter, as shown in FIG. 5D, the droplets T on the movable contact point 35 remain at the contact section around the opening portion 36 until the formation of the condensation K is stopped due to an increase in temperature of the movable member 30 and, while being maintained in that state, the droplets T are gradually dried and are reduced in size. Furthermore, the formed condensation K is, together with the droplets T and while being maintained in that state, gradually dried and is transformed from droplets to a film. Finally, the movable member 30 and the fixed member 40 are entirely dried.

Thus, according to this embodiment, it is possible to prevent the water column S from being formed between the contact section of a pair of the movable contact point 35 and the fixed contact point 45 facing each other and to prevent the contact points 35 and 45 from being electrically connected through the water column S, causing a horn switch fault. That is, with this horn switch device 20, it is possible to avoid a fault in which, the contact points 35 and 45 being electrically connected through the water column S thereby the horn circuit being closed, the vehicle's horn is suddenly sounded without the occupant operating the horn, and the horn keeps sounding until the water column S disappears.

In conjunction with this, the water column S is less likely to be formed even if the space between the contact surfaces of the movable contact point 35 and the fixed contact point 45, as well as the horn stroke of the horn switch device 20, is smaller than the conventional device. Thus, the horn stroke can be appropriately set. At the same time, because there is no need to dispose the movable contact point 35 and the fixed contact point 45 in areas in the horn switch device 20 where the water column S is less likely to be formed (for example, areas at the outer peripheral portion), the design flexibility can be increased.

Furthermore, herein, the opening portion 36 of the movable contact point 35 is smaller in size than the contact section of the lower fixed contact point 45 (the top surface of the rivet 46), and the outer peripheral side of the opening portion 36 serves as the contact section of the movable contact point 35. Therefore, the lower peak of the droplets T formed around the opening portion 36 (see FIG. 5) can be located at a position distant from the center of the contact section of the fixed contact point 45, i.e., the edge side or the outer side. As a result, the lower peak of the produced droplets T is less likely to touch the fixed contact point 45, whereby the formation of the water column S can be more effectively prevented. In addition, even if the droplets T drop from the movable contact point 35, the droplets T run down the outer wall portion of the fixed contact point 45 and are less likely to remain in the contact section of the fixed contact point 45. Thus, even if the condensation K is formed to an excessive extent, the water column S is less likely to be formed, and the formation thereof can be effectively prevented.

Herein, it is preferable that the opening portion 36 be formed to have a diameter slightly smaller than that of the contact section of the disc-shaped rivet 46 on the lower side and be formed as large as possible in the contact section by, for example, providing the opening portion at the central portion of the contact section of the movable contact point 35. This provides an area in which the movable contact point 35 and the fixed contact point 45 (rivet 46) can be brought into contact with each other (contact sections), and can further increase the effect caused by the provision of the opening portion 36 and the effect of preventing the formation of the water column S.

In this embodiment, although three movable contact points 35 and three fixed contact points 45 are provided in the horn switch device 20, at least a pair of the contact points 35 and 45 may be provided on the movable member 30 and the fixed member 40. Furthermore, the opening portion 36 provided in the movable contact point 35 may be directly formed by boring a hole in the movable contact point 35. For example, it may also be provided on the movable contact point 35 though another member, for example, by providing a hole at a central portion of a conducting terminal, such as a rivet, to be attached to the movable contact point 35. In addition, this horn switch device 20 may be formed either integrally with the airbag device 1 or separately from the airbag device 1, i.e., solely of the horn switch device 20.

In addition, other than the horn switch device 20, the present invention may be applied to a similar switch device used in a vehicle or an environment where the condensation K can be formed, that is, a switch device that conducts electricity when the contact sections of a pair of contact points, disposed on an upper side and a lower side, are brought into contact with each other. Furthermore, the present invention may be applied, not only to a switch device in which the upper contact point is pressed down, but also to, for example, a switch device in which the lower contact point is pushed up and is electrically connected, closing the switch circuit. In this case too, the formation of the water column S can be prevented and the above-described effects can be obtained.

## Claims

1. A switch device comprising at least a pair of contact points facing each other that are disposed on an upper side and a lower side so as to be capable of relatively moving toward and away from each other, the switch device conducting electricity when contact sections of the pair of contact points are brought into contact with each other,
wherein an opening portion is provided in the contact section of the contact point disposed on the upper side.

2. The switch device according to claim 1,
wherein an opening of the opening portion is smaller than the contact section of the contact point disposed on the lower side, and an outer peripheral side of the opening portion is the contact section of the contact point disposed on the upper side.

3. The switch device according to claim 2,
wherein the contact section of the contact point disposed on the lower side is disc-shaped.

4. The switch device according to any one of claims 1 to 3,
wherein the switch device is a horn switch device attached to a steering wheel, and
wherein the pair of contact points comprise a fixed contact point provided on a fixed member that is fixed to the steering wheel and a movable contact point provided on a movable member at a position facing the fixed contact point, the movable member being disposed above the fixed member in an opposed manner so as to be capable of moving toward and away from the fixed member and being urged in a direction away from the fixed member.

5. An airbag device with a horn switch to be attached to a steering wheel, the airbag device comprising the switch device according to claim 4.
